# FASCICULE DE BREVET EUROPEEN

(11) **EP 1 084 940 B1**
(45) Date de publication et mention de la délivrance du brevet: **01.03.2006**
(21) Numéro de dépôt: 00402513.6
(22) Date de dépôt: 12.09.2000
(51) Int. Cl.: B62D 29/00

(54) **Elément de structure composite, notamment support de face avant de véhicule**
Zusammengesetztes Bauteil , insbesondere Frontplatte eines Fahrzeugs
Composite structural part, especially front part support

(30) Priorité: 15.09.1999 FR 9911525
(43) Date de publication de la demande: 21.03.2001
(73) Titulaire: VALEO THERMIQUE MOTEUR, 78321 La Verrière (FR)
(72) Inventeur: Guyomard, Jean-Nicolas, 27930 Le Mesnil Fuguet (FR)
(74) Mandataire: Bezault, Jean

(56) Documents cités:
- EP-A- 0 370 342
- GB-A- 2 196 584

## Description

L'invention concerne un élément de structure utilisable notamment, mais non limitativement, en tant que support de face avant pour véhicule automobile.

Il est de pratique courante aujourd'hui, lors du montage d'un véhicule automobile, de mettre en place à l'avant de celui-ci divers appareils tels que blocs d'éclairage, échangeurs de chaleur, avertisseurs sonores, serrure de capot, sous forme d'un sous-ensemble dans lequel ces appareils sont fixés sur un support dit de face avant. Un tel sous-ensemble peut être réalisé par un équipementier, et le constructeur automobile n'a plus qu'à le présenter à l'avant du véhicule et à fixer le support de face avant sur la structure du véhicule, réalisant ainsi la fixation indirecte des appareils portés par le support de face avant, sans avoir besoin de manipuler ni de fixer individuellement ces appareils sur la structure du véhicule. Ceci constitue une simplification considérable des opérations de montage du véhicule.

EP 0 658 470 A décrit un tel support de face avant comprenant un corps en matière plastique surmoulé sur un renfort métallique en tôle emboutie.

EP 0 370 342 A décrit un élément de structure selon le préambule de la revendication 1 comprenant un premier composant ayant la forme générale d'un canal présentant des bords libres opposés, et un second composant en matière plastique surmoulé sur le premier composant, définissant au moins un voile qui s'étend transversalement à l'intérieur du canal, et se prolongeant à l'extérieur du canal dans la région desdits bords libres.

Dans cet élément connu, le second composant n'est en liaison avec les bords libres du premier composant qu'en des zones discrètes le long de ceux-ci à travers des ouvertures qui y sont ménagées.

Le but de l'invention est d'obtenir une liaison plus rigide entre le second composant et les bords libres du premier composant.

L'invention vise notamment un élément de structure du genre défini plus haut, et prévoit que chaque bord libre est divisé dans sa direction longitudinale en tronçons décalés les uns par rapport aux autres alternativement vers l'intérieur et vers l'extérieur dans la direction latérale du canal, et que le second composant forme sur chaque bord libre un cordon longitudinal qui recouvre la face externe des tronçons décalés vers l'intérieur et la face interne des tronçons décalés vers l'extérieur.

Le cordon peut ainsi être en liaison avec le bord libre sur toute la longueur de celui-ci, en lui servant d'appui aussi bien vers l'intérieur que vers l'extérieur.

Des caractéristiques optionnelles de l'invention, complémentaires ou alternatives, sont énoncées ci-après:
- Chaque cordon présente une section transversale sensiblement uniforme.
- Chaque cordon recouvre également la face interne des tronçons décalés vers l'intérieur.
- Les tronçons d'un même bord libre sont séparés les uns des autres par des découpes.
- Les tronçons d'un même bord libre sont raccordés les uns aux autres par des portions inclinées par rapport à la direction longitudinale dudit bord, assurant la continuité de celui-ci.
- Lesdites portions inclinées, y compris leurs tranches libres, sont enrobées dans ledit cordon.
- Les tronçons de l'une au moins des deux séries, intérieure et extérieure, présentent en section transversale une forme incurvée.
- Les tronçons des deux séries présentent en section transversale des formes incurvées selon des rayons différents.
- La paroi du canal présente, à distance desdits bords libres, au moins une déformation en contre-dépouille vers l'intérieur, qui est enrobée dans le second composant pour assurer un accrochage mécanique mutuel sans percement de la paroi.
- Ladite déformation en contre-dépouille est réalisée dans une région de fond du canal, sensiblement à égale distance des deux bords libres.

Les caractéristiques et avantages de l'invention seront exposés plus en détail dans la description ci-après, en se référant aux dessins annexés.

La figure 1 est une vue en coupe transversale d'un élément de structure composite selon l'invention.

Les figures 2 et 3 sont des vues en perspective, partiellement arrachées, de deux éléments de structure selon l'invention.

Les figures 2a et 3a sont des détails agrandis des figures 2 et 3 respectivement, montrant en partie un bord libre du premier composant.

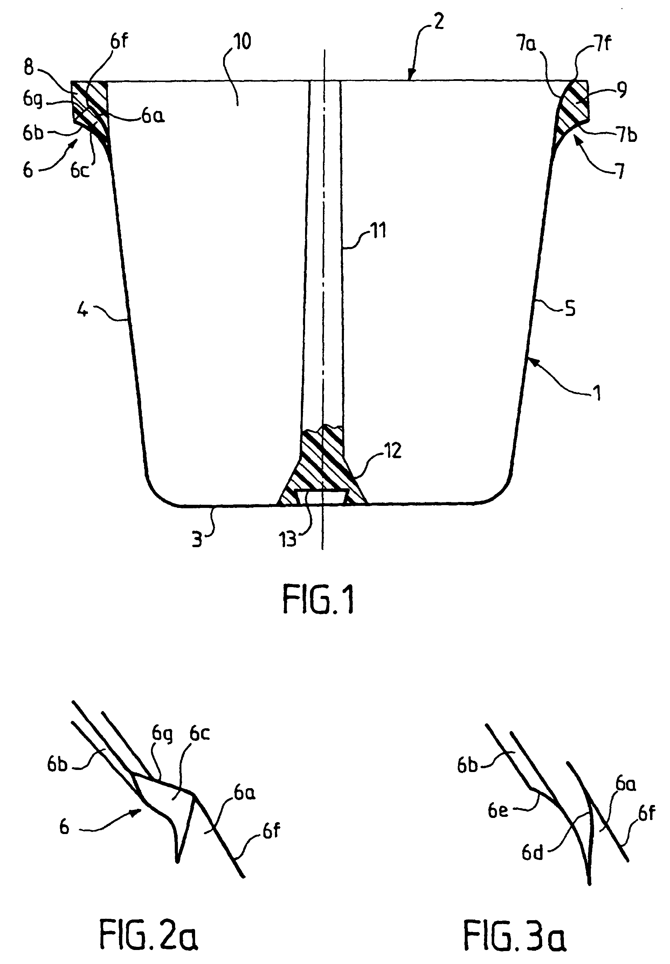

L'élément de structure représenté sur chacune des figures 1 à 3 comprend un premier composant 1 en forme de canal obtenu par exemple par emboutissage d'une tôle d'acier, et un second composant 2 en matière plastique surmoulée, par exemple par injection, sur le composant 1. Le canal 1 est une pièce profilée en U comprenant un fond 3 et deux parois latérales 4, 5, présentant, à l'opposé du fond 3, des bords libres respectifs 6, 7.

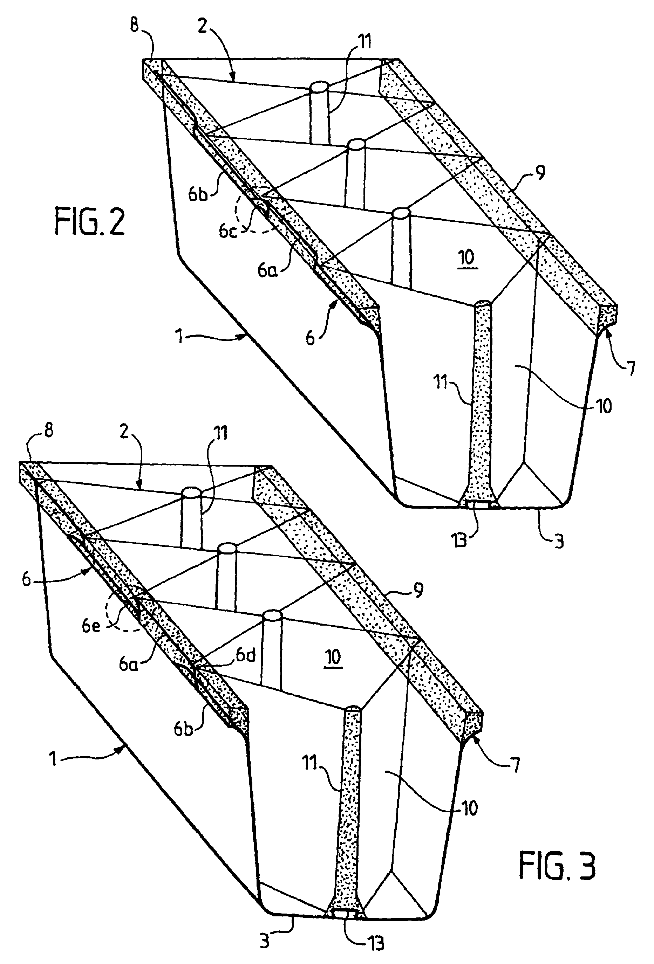

Selon l'invention, chaque bord libre est divisé dans sa direction longitudinale en tronçons décalés les uns par rapport aux autres alternativement vers l'intérieur et vers l'extérieur dans la direction latérale du canal. Ainsi, le bord libre 6 comprend des tronçons intérieurs 6a et des tronçons extérieurs 6b, et le bord 7 comprend des tronçons intérieurs 7a et des tronçons extérieurs 7b. Les tronçons 6a et 6b (et bien entendu également les tronçons 7a et 7b) peuvent être reliés entre eux par des portions 6c inclinées par rapport à la direction longitudinale du bord 6, comme montré sur les figures 2 et 2a. En variante, comme montré sur les figures 3 et 3a, les tronçons 6a, 6b peuvent se terminer par des tranches libres 6d, 6e résultant de découpes pratiquées dans la tôle sans enlèvement de matière.

Le second composant surmoulé comprend deux cordons 8, 9 s'étendant respectivement le long des bords 6 et 7 du canal, reliés entre eux par des voiles 10. La figure 1 illustre, dans sa moitié gauche et dans sa moitié droite, deux dispositions possibles du cordon 8, 9 par rapport aux bords 6, 7. Bien entendu, il est possible d'adopter la même disposition des deux côtés d'un élément selon l'invention, cette disposition pouvant être indifféremment celle du côté gauche ou celle du côté droit de la figure 1.

Sur le côté gauche, les tronçons intérieurs 6a, et les portions de raccordement 6c si elles existent, sont entièrement enrobés dans le cordon 8. En revanche, seule la face interne des tronçons extérieurs 6b est recouverte par le cordon. Les tranches libres longitudinales 6f des tronçons 6a, et le cas échéant les tranches libres 6g des portions 6c, sont elles-mêmes noyées dans le cordon 8, qui s'étend plus haut, c'est-à-dire plus loin du plan du fond 3, que le bord 6.

En revanche, le cordon 9 du côté droit recouvre seulement la face externe des tronçons intérieurs 7a et la face interne des tronçons extérieurs 7b, et affleure en hauteur aux tranches longitudinales 7f des tronçons 7a.

Dans tous les cas, comme on le voit sur les figures 2 et 3, les cordons 8, 9 peuvent avoir une section transversale constante sur toute leur longueur.

Pour simplifier, la configuration du bord droit du canal 1 n'est pas représentée sur les figures 2 et 3, cette configuration pouvant être semblable à celle du bord gauche.

Les tronçons des bords libres 6, 7 représentés sur les figures 1 et 3a sont incurvés vers l'extérieur, avec un rayon de courbure plus petit pour les tronçons extérieurs 6b, 7b que pour les tronçons intérieurs 6a, 7a. En variante, les tronçons intérieurs 6a peuvent être plans comme montré sur la figure 2a, et les tronçons intérieurs et/ou extérieurs peuvent avoir un profil plus complexe comme les tronçons extérieurs 6b représentés sur la figure 2a.

Les cordons 8 et 9 sont reliés entre eux par une multiplicité de voiles 10 s'étendant sensiblement selon des plans inclinés par rapport à la direction longitudinale de l'élément et se croisant deux à deux à mi-largeur de celui-ci. Le long de chaque ligne de croisement de deux voiles s'étend une colonne 11 verticale, c'est-à-dire perpendiculaire au fond 3, d'un diamètre supérieur à l'épaisseur des voiles, qui s'appuie sur le fond 3 par un socle élargi 12. Chaque socle 12 enrobe une saillie 13 en contre-dépouille réalisée par une déformation locale du fond 3 vers l'intérieur du canal, assurant ainsi un accrochage mécanique du composant 2 et du fond 3.

Pour l'utilisation de l'élément selon l'invention en tant que support de face avant pour véhicule, le second composant est moulé de manière à présenter, comme connu en soi, notamment à l'extérieur du canal 1, des parties appropriées pour la fixation des appareils sur le support et pour la fixation de celui-ci sur la structure du véhicule.

## Revendications

1. Élément de structure comprenant un premier composant (1) ayant la forme générale d'un canal présentant des bords libres opposés (6, 7), et un second composant en matière plastique (2) surmoulé sur le premier composant, définissant au moins un voile (10) qui s'étend transversalement à l'intérieur du canal, et se prolongeant à l'extérieur de celui-ci dans la région desdits bords libres, **caractérisé en ce que** chaque bord libre est divisé dans sa direction longitudinale en tronçons (6a, 6b, 7a, 7b) décalés les uns par rapport aux autres alternativement vers l'intérieur et vers l'extérieur dans la direction latérale du canal, et que le second composant forme sur chaque bord libre un cordon longitudinal (8, 9) qui recouvre la face externe des tronçons décalés vers l'intérieur et la face interne des tronçons décalés vers l'extérieur.

2. Élément selon la revendication 1, dans lequel chaque cordon présente une section transversale sensiblement uniforme.

3. Élément selon l'une des revendications 1 ou 2, dans lequel chaque cordon recouvre également la face interne des tronçons (6a, 7a) décalés vers l'intérieur.

4. Élément selon l'une des revendications précédentes, dans lequel les tronçons d'un même bord libre (6) sont séparés les uns des autres par des découpes (6d, 6e).

5. Élément selon l'une des revendications 1 à 3, dans lequel les tronçons d'un même bord libre (6) sont raccordés les uns aux autres par des portions (6c) inclinées par rapport à la direction longitudinale dudit bord, assurant la continuité de celui-ci.

6. Élément selon la revendication 5, dans lequel lesdites portions inclinées (6c), y compris leurs tranches libres (6g), sont enrobées dans ledit cordon.

7. Élément selon l'une des revendications précédentes, dans lequel les tronçons de l'une au moins des deux séries, intérieure et extérieure, présentent en section transversale une forme incurvée.

8. Élément selon la revendication 7, dans lequel les tronçons des deux séries présentent en section transversale des formes incurvées selon des rayons différents.

9. Élément selon l'une des revendications précédentes, dans lequel la paroi du canal présente, à distance desdits bords libres (6, 7), au moins une déformation (13) en contre-dépouille vers l'intérieur, qui est enrobée dans le second composant pour assurer un accrochage mécanique mutuel sans percement de la paroi.

10. Élément selon la revendication 9, dans lequel ladite déformation en contre-dépouille est réalisée dans une région de fond (3) du canal, sensiblement à égale distance des deux bords libres (6, 7).

11. Support de face avant pour véhicule constitué par un élément selon l'une des revendications précédentes.

## Patentansprüche

1. Strukturelement mit einem ersten Bauteil (1) mit der allgemeinen Form eines Kanals, der gegenüberliegende freie Ränder (6, 7) aufweist, und mit einem zweiten Bauteil (2) aus Kunststoff, das auf das erste Bauteil aufgeformt ist und mindestens eine Abdeckung (10) definiert, die sich quer im Inneren des Kanals erstreckt und sich außerhalb dieses Kanals in dem Bereich der freien Ränder verlängert, **dadurch gekennzeichnet, dass** jeder freie Rand in seiner Längsrichtung in Teilstücke (6a, 6b, 7a, 7b) unterteilt ist, die zueinander abwechselnd nach innen und nach außen in der seitlichen Richtung des Kanals versetzt sind, und dass das zweite Bauteil auf jedem freien Rand einen Längswulst (8, 9) bildet, der die Außenfläche der nach innen versetzten Teilstücke und die Innenfläche der nach außen versetzten Teilstücke bedeckt.

2. Element nach Anspruch 1, bei dem jeder Wulst einen im Wesentlichen gleichförmigen Querschnitt aufweist.

3. Element nach einem der Ansprüche 1 oder 2, bei dem jeder Wulst ebenfalls die Innenseite der nach innen versetzten Teilstücke (6a, 7a) bedeckt.

4. Element nach einem der vorhergehenden Ansprüche, bei dem die Teilstücke des gleichen freien Rands (6) durch Ausschnitte (6d, 6e) voneinander getrennt sind.

5. Element nach einem der Ansprüche 1 bis 3, bei dem die Teilstücke des gleichen freien Rands (6) miteinander durch Abschnitte (6c) verbunden sind, die bezüglich der Längsrichtung des Rands geneigt sind, wodurch dessen Kontinuität gewährleistet wird.

6. Element nach Anspruch 5, bei dem die geneigten Abschnitte (6c) einschließlich ihrer freien Kanten (6g) im Wulst umhüllt sind.

7. Element nach einem der vorhergehenden Ansprüche, bei dem die Teilstücke mindestens einer der beiden Reihen, der inneren und der äußeren, im Querschnitt eine gekrümmte Form aufweisen.

8. Element nach Anspruch 7, bei dem die Teilstücke der beiden Reihen im Querschnitt gemäß unterschiedlichen Radien gekrümmte Formen aufweisen.

9. Element nach einem der vorhergehenden Ansprüche, bei dem die Wand des Kanals in Abstand zu den freien Rändern (6, 7) mindestens eine Verformung (13) in Gegenschräge nach innen aufweist, die im zweiten Bauteil umhüllt ist, um eine gegenseitige mechanische Befestigung ohne Durchbohren der Wand zu gewährleisten.

10. Element nach Anspruch 9, bei dem die Verformung in Gegenschräge in einem Bodenbereich (3) des Kanals im Wesentlichen in gleichem Abstand zu den beiden freien Rändern (6, 7) durchgeführt wird.

11. Vorderseitenträger für ein Fahrzeug, der aus einem Element nach einem der vorhergehenden Ansprüche besteht.

## Claims

1. Structural element comprising a first component (1) having the overall shape of a channel exhibiting opposite free edges (6, 7) and a second component made of plastic (2) overmoulded onto the first component, defining at least one web (10) which extends transversely across the inside of the channel, and is extended on the outside thereof in the region of the said free edges, **characterized in that** each free edge is divided in its longitudinal direction into sections (6a, 6b, 7a, 7b) offset from one another alternately towards the inside and towards the outside in the lateral direction of the channel, and **in that** the second component forms, along each free edge, a longitudinal strip (8, 9) which covers the external face of the inwardly-offset sections and the internal face of the outwardly-offset sections.

2. Element according to Claim 1, in which each strip has a substantially uniform cross section.

3. Element according to one of Claims 1 or 2, in which each strip also covers the internal face of the inwardly-offset sections (6a, 7a).

4. Element according to one of the preceding claims, in which the sections of one and the same free edge (6) are separated from one another by cutouts (6d, 6e).

5. Element according to one of Claims 1 to 3, in which the sections of one and the same free edge (6) are connected together by portions (6c) that are inclined relative to the longitudinal direction of the said edge, providing the latter with continuity.

6. Element according to Claim 5, in which the said inclined portions (6c), including their free edge faces (6g), are encased in the said strip.

7. Element according to one of the preceding claims, in which the sections of at least one of the two series, inner outer, have a curved shape in cross section.

8. Element according to Claim 7, in which the sections of the two series have, in cross section, curved shapes that have different radii.

9. Element according to one of the preceding claims, in which the wall of the channel exhibits, some distance from the said free edges (6, 7), at least one deformation (13) towards the inside with an undercut, which is encased in the second component in order to provide mutual mechanical attachment without piercing the wall.

10. Element according to Claim 9, in which the said undercut deformation is produced in a bottom region (3) of the channel, essentially equidistant from the two free edges (6, 7).

11. Vehicle front face support consisting of an element according to one of the preceding claims.
